# EUROPÄISCHE PATENTSCHRIFT

(11) **EP 4 204 613 B1**
(45) Veröffentlichungstag und Bekanntmachung des Hinweises auf die Patenterteilung: **27.05.2026**
(21) Anmeldenummer: 21769424.9
(22) Anmeldetag: 30.08.2021
(51) Int. Cl.: D01H 13/00, B65H 63/00, D04B 35/10, G05B 19/409

(54) **BEDIENVORRICHTUNG FÜR EINE TEXTILMASCHINE UND VERFAHREN ZUR BEDIENUNG EINER TEXTILMASCHINE**
OPERATING DEVICE FOR A TEXTILE MACHINE AND METHOD FOR OPERATING A TEXTILE MACHINE
DISPOSITIF DE FONCTIONNEMENT POUR UNE MACHINE TEXTILE ET PROCÉDÉ DE FONCTIONNEMENT D'UNE MACHINE TEXTILE

(30) Priorität: 31.08.2020 EP 20193620
(43) Veröffentlichungstag der Anmeldung: 05.07.2023
(73) Patentinhaber: Rieter AG, 8406 Winterthur (CH)
(72) Erfinder: SCHMITT, Max, 8050 Zürich (CH); NIEMEYER, Cornelius, 78476 Allensbach (DE); WETTSTEIN, Dominic, 8048 Zürich (CH)
(86) Internationale Anmeldenummer: PCT/EP2021/073831
(87) Internationale Veröffentlichungsnummer: WO 2022/043540

(56) Entgegenhaltungen:
- EP-A1- 2 136 274
- EP-A1- 2 869 149
- EP-A1- 3 170 778
- EP-A1- 3 336 625
- WO-A1-2020/070642
- WO-A2-02/086214
- DE-A1- 102009 018 187

## Beschreibung

### Technisches Gebiet

Die Erfindung betrifft eine Bedienvorrichtung zur Bedienung von Textilmaschinen und ein Verfahren zur Bedienung von Textilmaschinen gemäss den unabhängigen Ansprüchen.

### Stand der Technik

Ein Bedienungsgerät für eine Textilmaschine ist beispielsweise aus der EP1186977 A2 bekannt. Hierbei wird zur Überwachung, Steuerung und Bedienung der Maschine ein Bildschirm genutzt, um Informationsmasken und Eingabemasken anzeigen zu können. Die Auswahl der Informationsmasken und Bedienungsmasken erfolgt durch eine Hauptbedienungsmaske, die eine Vielzahl von Tastfeldern zur Selektierung der Informationsmasken und Eingabemasken aufweist. Insoweit lässt sich jede der hinterlegten Masken direkt über einen Tastenbefehl aufrufen.

EP2869149A1 offenbart ein Bediengerät einer Textilmaschine, auf dem auf verschiedenen Bereichen unterschiedliche Informationen dargestellt werden, wobei Zugriffsrechte für Bildschirme und Ebenen zugewiesen werden.

WO2012127409 offenbart eine Kettenwirkmaschine und ein Verfahren zum Zugang zur Steuerung der Maschine. Es ist dabei ein Fernzugang vorgesehen, um die Kontrolle über eine vorbestimmte Anzahl von Funktionen zu übernehmen. Als Einheit von der aus ferngesteuert wird, wird ein Computer oder ein Mobiltelefon vorgesehen, das über ein Netzwerk mit der Maschine verbunden ist. Die Maschine ist mit einem Display und einem Webserver versehen, so dass mittels eines IP-Protokolls von dem entfernten Computer auf die Maschine zugegriffen werden kann.

DE102006007992 offenbart eine Textilmaschinenanlage mit einer Mehrzahl von vernetzten Textilmaschinen, wobei die Textilmaschinen an einer lokalen Bedieneinrichtung und/oder an einer entfernten Bedieneinrichtung bedient werden können.

EP2573236 offenbart ein Textilmaschinensystem, welches mehrere Textilmaschinen umfasst, wobei jede der Textilmaschinen mindestens eine Textilverarbeitungseinheit und eine Verwaltungsvorrichtung umfasst, die einen Betriebsdatensatz über die Textilverarbeitungseinheit sammelt und verwaltet. Die Verwaltungsvorrichtung umfasst einen Anzeigeabschnitt, der den Betriebsdatensatz anzeigt, und einen Kommunikationsabschnitt, der den Betriebsdatensatz an die Verwaltungsvorrichtung einer anderen Textilmaschine sendet und von dieser empfängt. Der Anzeigeabschnitt kann die Betriebsdatensätze über die Textilverarbeitungseinheiten mehrerer Textilmaschinen innerhalb eines Bildschirms anzeigen.

EP2108723 offenbart weiter ein Textilmaschinensystem mit mehreren automatischen Wicklern. Jede der automatischen Aufwickelvorrichtungen umfasst eine Vielzahl von Garnaufwickeleinheiten, eine Rahmensteuervorrichtung und einen ZigBee-Anschluss. Die Rahmensteuervorrichtung verwaltet Informationen über die Garnwickeleinheit und steuert die Garnwickeleinheit. Das ZigBee-Terminal kann eine drahtlose Kommunikation direkt mit einem ZigBee-Terminal durchführen, das in einem anderen automatischen Wickler vorgesehen ist. Die Rahmensteuerungsvorrichtung sendet und empfängt Wickelinformationen zu und von der Rahmensteuerungsvorrichtung, die in einer anderen Textilmaschine vorgesehen sind, durch drahtlose Kommunikation durch die ZigBee-Terminals.

Eine Vorrichtung mit einer tragbaren Bedieneinheit für eine Gruppe von Textilmaschinen zeigt zum Beispiel die BE 10034743 A3. Diese offenbart eine Vorrichtung zum Betrieb von We9Maschinen mit einer tragbaren Bedieneinheit, die abwechselnd mit verschiedenen Maschinen einer Gruppe Signal übertragend verbunden werden kann. Über Tasten an der Bedieneinheit werden die wesentlichen Bewegungsabläufe der We9Maschine ausgelöst. Die Verbindung zwischen We9Maschine und tragbarer Bedieneinheit erfolgt mit einer Steckverbindung oder drahtlos. Bei der drahtlosen Variante wird vom Bediener ein Code eingegeben, der festlegt, mit welcher der Maschinen einer Gruppe die Bedieneinheit per Funk Signal übertragend verbunden werden soll. Die Vorrichtung gemäß BE 10034743 A3 enthält darüber hinaus elektronische Erkennungsmittel, mit denen die tragbaren Bedieneinheiten bei der Verbindung mit einer der We9Maschinen identifiziert werden.

EP3170778 offenbart ein Textilmaschinenmanagementsystem umfassend: eine Vielzahl von Textilmaschinen, von denen jede eine Vielzahl von Faserverarbeitungseinheiten umfasst, wobei eine Steuervorrichtung konfiguriert ist, um die Faserverarbeitungseinheiten zu steuern und ein oder mehrere gemeinsam genutzte Geräte, die auf allen oder einigen der Faserverarbeitungseinheiten auf gemeinsame Weise bereitgestellt sind; und eine Verwaltungsvorrichtung, die zum Verwalten der Textilmaschinen konfiguriert ist. Die Verwaltungsvorrichtung umfasst eine Kommunikationseinheit, die zum gegenseitigen Kommunizieren mit einem Endgerät konfiguriert ist, das eine Anzeigeeinheit umfasst, die zum Anzeigen von Informationen konfiguriert ist, und eine Funktionsbereitstellungseinheit, die zum Bereitstellen des Endgeräts mit einer Vielzahl von Funktionen zum Verwalten einer oder mehrerer der Faserverarbeitungseinheiten und/oder einer oder mehrerer der gemeinsam genutzten Vorrichtungen. Die Verwaltungsvorrichtung oder das Endgerät umfasst eine Anzeigesteuerung, die konfiguriert ist, um die Anzeigeeinheit zu veranlassen, einen Bildschirm anzuzeigen, der jeder von der Funktionsbereitstellungseinheit bereitgestellten Funktion entspricht.

EP3165976 offenbart ein Verfahren zum Betreiben einer mit zumindest zwei Spinnereivorbereitungsmaschinen gekoppelten Anzeige- und Bedienvorrichtung, welche einen Schritt des Darstellens von Maschinenanzeigeabschnitten in einem Nichthervorhebezustand hat, von denen jedes eine mit der Anzeige- und Bedienvorrichtung gekoppelte Spinnereivorbereitungsmaschine repräsentiert, auf einem Anzeigeabschnitt der Vorrichtung. Ferner ist es möglich, einen Maschinenanzeigeabschnitt mittels eines Bedienabschnitts der Vorrichtung auszuwählen. Jedes der vorgenannten Verfahren kann mehrere Berechtigungsebenen aufweisen. Dabei weist das Verfahren einen Schritt auf, es einem Benutzer zu ermöglichen, mittels der Vorrichtung eine Berechtigungsebene einstellen zu können. Vor dem Schritt des Anzeigens des ersten oder zweiten Aktionsauswahlanzeigeabschnitts weist das Verfahren ferner einen Schritt des Auswählens ausführbarer erster und/oder zweiter Aktionen auf Basis der eingestellten Berechtigungsebene auf. Schließlich gibt es noch einen Schritt des Deaktivierens oder Unterdrückens der Anzeige derjenigen Aktionsanzeigeabschnitte, deren zugeordnete erste bzw. zweite Aktionen der eingestellten Berechtigungsebene nicht ausführbar sind. Damit können dem aktuellen Benutzer auf Basis der aktuell eingestellten Berechtigungsebene nur die Aktionen als auswählbar angezeigt werden, die ausgeführt werden dürfen. Damit können Bedienfehler minimiert und Bedienungen von nicht ausgebildetem Personal unterbunden werden, was die Betriebssicherheit erhöht. Die vorgenannten Berechtigungsstufen können auch mehr als drei sein. Überdies können die Berechtigungsstufen auch Rollen beinhalten. Beispielsweise kann eine Rolle die Zuständigkeit für nur einen Teil der gekoppelten Spinnereivorbereitungsmaschinen beinhalten. Folgendes Beispiel soll dies verdeutlichen: Es kann vorgesehen sein, dass zwei Strecken unabhängig voneinander betrieben werden.

DE102009018187 beschreibt eine Vorrichtung zum Betrieb von Bedien- und Anzeigeeinheiten an Textilmaschinen und Anlagen. Um eine eindeutige Benutzeridentifikation zu ermöglichen und kontaktlos sowie automatisch zu arbeiten, sind im Bereich der Maschinen und Anlagen Lesegeräte vorhanden, mit denen die Daten von Informationsträgern erfassbar oder Personen direkt identifizierbar sind. Die derart erhaltenen Angaben sind in eine Auswerteeinrichtung eingebbar, die elektrische Signale für eine Bedien- und Anzeigeeinrichtung ausgibt.

EP2136274 zeigt ein elektronisches Gerät, welches ausgerichtet ist, auf einem Arm eines Bedieners getragen und im Gebiet der automatischen Fertigung in der Textilindustrie verwendet zu werden. Das Gerät umfasst eine wiederaufladbare Batterie, einen Touchscreen und ist eingerichtet für eine drahtlose Kommunikation mit Maschinenautomations- und -steuereinrichtungen, sowie zentralisierten und verteilten Computern zur Steuerung von Produktionsbetrieben.

Eine Bedien- und Anzeigeeinrichtung gemäss der DE102009018187 bzw. das elektronische Gerät gemäss der EP2136274 für eine Textilmaschine ermöglichen nicht einen Basismodus und einen Expertenmodus, wobei für den Expertenmodus eine Autorisierung erforderlich ist, jedoch nicht für den Basismodus. Diese Vorrichtungen ermöglichen auch nicht sowohl eine Bedienung einer entfernten Textilmaschine als auch eine Bedienung der Textilmaschine durch einen entfernten Benutzer.

### Darstellung der Erfindung

Der Erfindung liegt die Aufgabe zugrunde, eine Bedienvorrichtung für eine Textilmaschine und ein Verfahren zur Bedienung einer Textilmaschine zur Verfügung zu stellen, welche zumindest gewisse Nachteile des Standes der Technik überwinden. Der Erfindung liegt insbesondere die Aufgabe zugrunde, eine Bedienvorrichtung für eine Textilmaschine und ein Verfahren zur Bedienung einer Textilmaschine zur Verfügung zu stellen, welche die Flexibilität zur Bedienung einer Textilmaschine verbessern.

Diese Aufgabe wird gelöst durch eine Bedienvorrichtung für eine Textilmaschine und ein Verfahren zur Bedienung einer Textilmaschine mit den Merkmalen der unabhängigen Ansprüche. Vorteilhafte Ausführungsformen ergeben sich aus den abhängigen Ansprüchen.

Eine Bedienvorrichtung zur Bedienung von Textilmaschinen, weist eine Umschaltfunktion auf zum Umschalten der Bedienvorrichtung zwischen einem Basismodus und einem Expertenmodus, wobei der Basismodus eine Basisbedienmaske zur Basisbedienung einer Textilmaschine durch einen Benutzer zur Verfügung stellt und der Expertenmodus eine Expertenbedienmaske zur Expertenbedienung der Textilmaschine durch den Benutzer zur Verfügung stellt. Die Bedienvorrichtung weist eine Autorisierungsfunktion auf zum Autorisieren des Benutzers und die Umschaltfunktion ist ausgebildet, für das Umschalten in den Expertenmodus die Autorisierung des Benutzers vorauszusetzen. Die Bedienvorrichtung weist eine Remote-Sendefunktion auf zur Bedienung einer entfernten Textilmaschine durch den Benutzer, welche Remote-Sendefunktion ausgebildet ist zum Erstellen einer Kommunikationsverbindung zu der entfernten Textilmaschine zur Bedienung der entfernten Textilmaschine durch den Benutzer. Die Bedienvorrichtung weist eine Remote-Empfangsfunktion auf zur Bedienung der Textilmaschine durch einen entfernten Benutzer, welche Remote-Empfangsfunktion ausgebildet ist zum Empfang einer Kommunikationsverbindung von einer entfernten Bedienvorrichtung zur Bedienung der Textilmaschine durch den entfernten Benutzer. Die Bedienvorrichtung ermöglicht eine flexible Bedienung von Textilmaschinen, sei es einer Textilmaschine die der Bedienvorrichtung zugeordnet ist, aber auch von entfernten Textilmaschinen. Es ist auch die Bedienung ausgehend von einer Spinnereizentrale oder einem mobilen Bediengerät zur Verfügung gestellt. Durch die Umschaltmöglichkeit zwischen einem Basismodus und einem Expertenmodus ist die Bedienvorrichtung anpassbar an die Aufgaben eines Benutzers, welche beispielsweise zwischen einem Schichtleiter und einer einfachen Bedienperson unterschiedlich sein können. Der Basismodus steht ohne Autorisierung zur Verfügung. Es ist sowohl die Bedienung einer entfernten Textilmaschine als auch die Bedienung der Textilmaschine durch einen entfernten Benutzer ermöglicht. Der Basismodus kann beispielsweise Not- oder Warnfunktionen der Textilmaschinen umfassen, während der Expertenmodus Funktionen zur Anpassung von Maschinenparametern umfassen kann. Eine Spinnerei mit einer Vielzahl von Textilmaschinen kann mit einer Vielzahl derartiger Bedienvorrichtungen ausgerüstet werden, um von jeder dieser Bedienvorrichtung eine Basis- oder Experten-Bedienung der Textilmaschinen der Spinnerei zu ermöglichen.

In einer Ausführungsform ist die Remote-Sendefunktion ausgebildet, die Kommunikationsverbindung zu der entfernten Textilmaschine über eine Bedienvorrichtung oder über eine Steuervorrichtung der entfernten Textilmaschine zu erstellen. Bestehende Infrastruktur kann genutzt werden zur Erstellung einer Kommunikationsverbindung zu der entfernten Textilmaschine.

In einer Ausführungsform ist die Remote-Sendefunktion ausgebildet, für das Erstellen der Kommunikationsverbindung die Autorisierung des Benutzers vorauszusetzen. Die Bedienung einer entfernten Maschine ist angepasst an Sicherheitsvorgaben.

In einer Ausführungsform ist die Remote-Sendefunktion ausgebildet ist, für das Erstellen der Kommunikationsverbindung den Expertenmodus vorauszusetzen. Die Bedienung einer entfernten Maschine ist angepasst an Aufgaben eines Benutzers.

In einer Ausführungsform ist die Remote-Sendefunktion ausgebildet, für das Erstellen der Kommunikationsverbindung eine Berechtigungsüberprüfung auszuführen, insbesondere abhängig von der entfernten Bedienvorrichtung oder der entfernten Steuervorrichtung. Dies kann abhängig davon sein, ob die entfernte Bedienvorrichtung/Steuervorrichtung frei oder belegt ist. Dies kann abhängig davon sein, um welchen Benutzer und/oder Maschinentyp es sich handelt, wobei bestimmten Benutzern für bestimmte Maschinen eine eingeschränkte Bedienung oder gar keine Bedienung ermöglicht ist.

**In** einer Ausführungsform ist die Remote-Sendefunktion ausgebildet, mehrere Kommunikationsverbindungen zu erstellen zur Bedienung von mehreren entfernten Textilmaschinen, insbesondere über entsprechende entfernte Bedienvorrichtungen oder über entsprechende entfernte Steuervorrichtungen. Beispielsweise können gleiche Maschinentypen gleichzeitig bedient werden.

**In** einer Ausführungsform ist die Remote-Empfangsfunktion ausgebildet, für den Empfang der Kommunikationsverbindung den Basismodus vorauszusetzen oder sicherzustellen. Beispielsweise kann die Bedienvorrichtung gesperrt sein für den Empfang einer Kommunikationsverbindung, falls diese in den Expertenmodus umgeschaltet ist. Beispielsweise kann die Bedienvorrichtung in den Basismodus umgestellt werden, um den Empfang der Kommunikationsverbindung zu ermöglichen.

In einer Ausführungsform ist die Remote-Empfangsfunktion ausgebildet, beim Empfang der Kommunikationsverbindung eine Autorisierung des Benutzers zurückzusetzen. Beispielsweise kann ein übergeordneter Schichtleiter einer einfachen Bedienperson die Autorisierung entziehen.

In einer Ausführungsform ist die Remote-Empfangsfunktion ausgebildet, beim Empfang der Kommunikationsverbindung eine zeitlich begrenzte Benutzer-Bestätigung zum Zurücksetzen einer Autorisierung des Benutzers abzuwarten und danach die Autorisierung des Benutzers zurückzusetzen. Beispielsweise kann die Autorisierung von einem Benutzer übernommen werden, falls dieser vergessen hat diese uurückzusetzen und sich von der Bedienvorrichtung entfernt hat.

In einer Ausführungsform ist die Bedienung der Textilmaschine abhängig von einer dem Benutzer oder dem entfernten Benutzer zugeordneten Berechtigungsstufe. Die Möglichkeiten zur Bedienung von Textilmaschinen können beispielsweise angepasst sein an Aufgaben eines Schichtleiters und an Aufgaben einer einfachen Bedienperson.

In einer Ausführungsform sind eine oder mehrere Funktionen der Bedienvorrichtung abhängig von in einer Spinnereizentrale abgespeicherten Informationen, insbesondere eine oder mehrere der folgenden Funktionen: die Autorisierungsfunktion, die Remote-Sendefunktion, die Remote-Empfangsfunktion, insbesondere abhängig von einer in der Spinnereizentrale abgespeicherten Berechtigungsstufe des Benutzers oder des entfernten Benutzers. Die Spinnereizentrale kann eine Benutzerdatenbank umfassen, welche Benutzern eine Berechtigungsstufe zuordnet.

In einer Ausführungsform ist die Bedienvorrichtung ausgebildet zur Anzeige, ob die Bedienvorrichtung in den Basismodus oder in den Expertenmodus umgeschaltet ist und/oder zur Anzeige, ob eine Kommunikationsverbindung von einer entfernten Bedienvorrichtung besteht. Der Benutzer der Bedienvorrichtung ist informiert über den Betriebszustand der Bedienvorrichtung.

In einer Ausführungsform ist die Bedienvorrichtung ausgebildet, dass zur Bedienung der Textilmaschine und/oder der entfernten Textilmaschine das Einstellen von Parametern der Textilmaschine zur Verfügung gestellt ist.

In einer Ausführungsform ist die Bedienvorrichtung ausgebildet, dass zur Bedienung der Textilmaschine die Anzeige von Informationen über die Textilmaschine und/oder über die entfernte Textilmaschine zur Verfügung gestellt ist, wobei die Informationen insbesondere Alarme und/oder Warnmeldungen umfassen, insbesondere abhängig davon ob sich die Informationen auf die Textilmaschine oder auf die entfernte Textilmaschine beziehen, insbesondere weiter abhängig davon, ob die Bedienvorrichtung in den Basismodus oder in den Expertenmodus umgeschaltet ist.

Bei einem Verfahren zur Bedienung von Textilmaschinen wird eine Bedienvorrichtung einer Textilmaschine zugeordnet. In der Bedienvorrichtung wird eine Umschaltfunktion zum Umschalten der Bedienvorrichtung zwischen einem Basismodus und einem Expertenmodus aktiviert, wobei der Basismodus eine Basisbedienmaske zur Basisbedienung der Textilmaschine durch einen Benutzer zur Verfügung stellt und der Expertenmodus eine Expertenbedienmaske zur Expertenbedienung der Textilmaschine durch den Benutzer zur Verfügung stellt. In der Bedienvorrichtung wird eine Autorisierungsfunktion zum Autorisieren des Benutzers aktiviert und die Umschaltfunktion wird ausgebildet, dass für das Umschalten in den Expertenmodus die Autorisierung des Benutzers vorausgesetzt ist. In der Bedienvorrichtung wird eine Remote-Sendefunktion aktiviert zur Bedienung einer entfernten Textilmaschine durch den Benutzer, welche Remote-Sendefunktion ausgebildet wird zum Erstellen einer Kommunikationsverbindung zu der entfernten Textilmaschine zur Bedienung der entfernten Textilmaschine durch den Benutzer der Bedienvorrichtung. In der Bedienvorrichtung wird eine Remote-Empfangsfunktion aktiviert zur Bedienung der Textilmaschine durch einen entfernten Benutzer, welche Remote-Empfangsfunktion ausgebildet wird zum Empfang einer Kommunikationsverbindung von einer entfernten Bedienvorrichtung zur Bedienung der Textilmaschine durch den entfernten Benutzer.

In einer Ausführungsform wird die Remote-Sendefunktion ausgebildet, die Kommunikationsverbindung zu der entfernten Textilmaschine über eine Bedienvorrichtung oder über eine Steuervorrichtung der entfernten Textilmaschine zu erstellen.

### Kurze Beschreibung der Figuren

Weitere Vorteile der Erfindung sind in den nachfolgenden Ausführungsbeispielen beschrieben. Es zeigen:
- **Fig. 1**: schematisch eine Ringspinnmaschine mit einer Bedienvorrichtung;
- **Fig. 2**: eine Basisbedienmaske der Bedienvorrichtung zur Bedienung einer Textilmaschine in einem Basismodus;
- **Fig. 3**: die Basisbedienmaske mit einer Warnmeldung;
- **Fig. 4**: die Basisbedienmaske mit einer Alarmmeldung;
- **Fig. 5**: den Umschaltvorgang von der Basisbedienmaske zu einer Expertenbedienmaske;
- **Fig. 6**: die Expertenbedienmaske der Bedienvorrichtung zur Bedienung einer Textilmaschine in einem Expertenmodus;
- **Fig. 7**: ein Dialogfenster zum Autorisieren eines Benutzers;
- **Fig. 8**: eine Liste von verschiedenen Meldungen;
- **Fig. 9**: eine Spinnerei mit mehreren Textilmaschinen und Bedienvorrichtungen, die an einem Kommunikationsnetz angeschlossen sind;
- **Fig. 10**: eine Anordnung mit zwei Bedienvorrichtungen zur Bedienung der Steuervorrichtungen von Textilmaschinen, wobei zur Bedienung einer zweiten Textilmaschine eine erste Bedienvorrichtung mit der Steuervorrichtung der zweiten Textilmaschine verbunden ist.

Gleiche Merkmale werden in unterschiedlichen Figuren mit gleichen oder ähnlichen Bezugszeichen versehen.

### Wege zur Ausführung der Erfindung

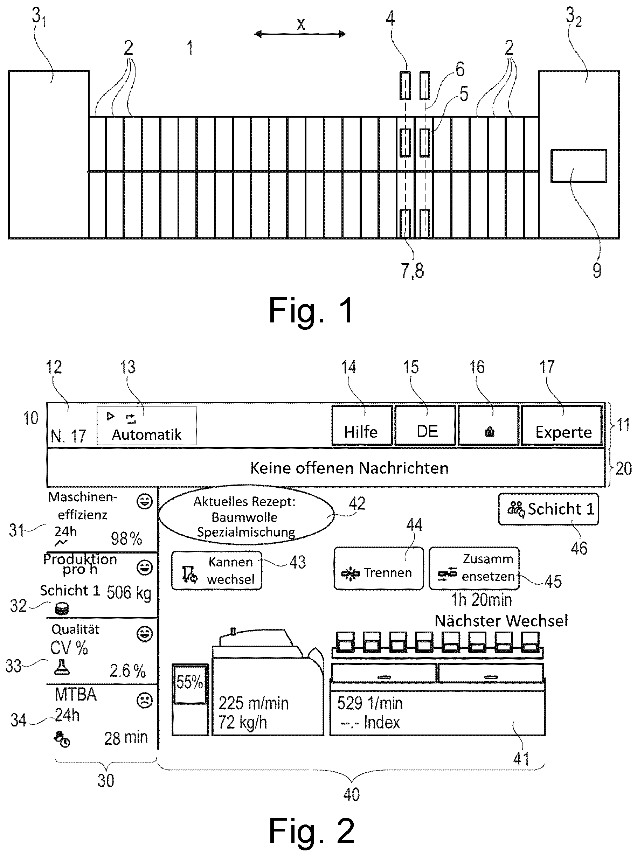

Fig. 1 zeigt schematisch eine Ringspinnmaschine 1, die über eine Vielzahl von nebeneinander angeordneten Spinnstellen 2 verfügt. Die Spinnstellen 2 befinden sich in einer Längsrichtung x der Ringspinnmaschine 1 angeordnet zwischen einem Kopf 3₁ und einem Fuss 3₂. Der Kopf 3₁ und/oder der Fuss 3₂ der Ringspinnmaschine 1 können Lager, Antriebe, Steuerungen, etc. enthalten, die für den Betrieb der Ringspinnmaschine 1 notwendig sind. Wie an zwei in der Fig. 1 dargestellten Spinnstellen 2 schematisch illustriert ist, können die Spinnstellen 2 eine Vorgarnspule 4 umfassen, die oberhalb eines Streckwerks 5 angeordnet ist. Auf der Vorgarnspule 4 ist ein Vorgarn 6 aufgewickelt. Das Vorgarn 6 läuft von der Vorgarnspule 4 über das Streckwerk 5, wo es verstreckt wird, und wird über einen Fadenführer zu einem Garnbildungselement geführt. Ein umlaufender Ring wickelt das fertige Garn auf einen Kops 7 auf. Der Kops 7 ist auf einer Spindel 8 aufgesetzt.

Wie in Fig. 1 schematisch illustriert ist, ist der Ringspinnmaschine 1 eine erfindungsgemässe Bedienvorrichtung 9 zur Bedienung der Ringspinnmaschine 1 zugeordnet. Die Bedienvorrichtung 9 ist am Fuss 3₂ der Ringspinnmaschine 1 angebracht. In einer anderen Ausführungsform kann die Bedienvorrichtung 9 am Kopf 3₂ der Ringspinnmaschine 1 angeordnet sein. In einer anderen Ausführungsform kann die Bedienvorrichtung 9 an einem Bedienpult angeordnet sein, welches in der Nähe der Ringspinnmaschine 1 aufgestellt ist. In einer anderen Ausführungsform kann die Bedienvorrichtung 9 als mobile Vorrichtung ausgeführt sein, beispielsweise als Tablet-Computer, Mobilfunkgerät, etc. In einer anderen Ausführungsform kann die Bedienvorrichtung 9 in einer anderen Weise der Ringspinnmaschine 1 zugeordnet sein.

Die Ringspinnmaschine 1 der Fig. 1 ist als Beispiel einer Textilmaschine T1, T2, T3 genannt. In anderen Ausführungsformen kann die Bedienvorrichtung 9 ausgebildet sein zur Bedienung irgendeiner Textilmaschine T1, T2, T3 wie beispielsweise einem Ballenöffner, einer Strecke, einer Karde, einer Kämmmaschine, einer Endspinnmaschine wie z.B. einer Rotorspinnmaschine, einer Luftspinnmaschine, etc., einem Flyer, einer Wickelmaschine, etc.

Die Bedienvorrichtung 9 umfasst eine Benutzerschnittstelle, um einem Benutzer die Bedienung einer Ringspinnmaschine 1 bzw. einer Textilmaschine T1, T2, T3 zu ermöglichen. Die Benutzerschnittstelle umfasst eine Anzeigevorrichtung und eine Eingabevorrichtung, welche z.B. als Touchscreen, als Monitor und Tastatur/Maus, etc. ausgeführt sein können. Die Bedienvorrichtung 9 umfasst Software und Hardware, insbesondere abgespeicherte Software-Instruktionen, die auf einem oder mehreren Prozessoren ablauffähig sind, um erforderliche Funktionen zur Verfügung zu stellen. In einer Ausführungsform umfasst die Bedienvorrichtung 9 einen Webbrowser, um Informationen anzuzeigen und dem Benutzer die Bedienung der Ringspinnmaschine 1 bzw. einer Textilmaschine T1, T2, T3 zu ermöglichen.

Die Bedienvorrichtung 9 weist eine Umschaltfunktion auf zum Umschalten der Benutzerschnittstelle der Bedienvorrichtung 9 zwischen einem Basismodus und einem Expertenmodus. Der Basismodus stellt eine Basisbedienung der Ringspinnmaschine 1 bzw. einer Textilmaschine T1, T2, T3 durch einen Benutzer zur Verfügung. Der Expertenmodus stellt eine Expertenbedienung der Ringspinnmaschine 1 bzw. einer Textilmaschine T1, T2, T3 durch den Benutzer zur Verfügung.

Fig. 2 zeigt schematisch eine Basisbedienmaske 10 der Benutzerschnittstelle der Bedienvorrichtung 9 mit Bedienelementen zur Bedienung der Ringspinnmaschine 1. In anderen Ausführungsformen ist die Basisbedienmaske 10 entsprechend angepasst zur Bedienung einer betreffenden Textilmaschine T1, T2, T3.

Die Basisbedienmaske 10 zeigt einem einfachen und wenig geschulten Arbeiter wesentliche Informationen und Funktionen an, die zur täglichen Interaktion mit der Ringspinnmaschine 1 notwendig sind. Die Basisbedienmaske 10 enthält somit eine sehr begrenzte Menge an Informations- und Interaktionsmöglichkeiten und wird angezeigt, wenn die Bedienvorrichtung 9 in den Basismodus umgeschaltet ist, um einem Benutzer eine Basisbedienung der Ringspinnmaschine 1 zur Verfügung zu stellen.

Im Einzelnen enthält die Basisbedienmaske 10 eine Kopfzeile 11, einen Benachrichtigungsbereich 20, einen Betriebsdatenbereich 30 zur Darstellung von Betriebsdaten der Maschine und einen Maschinenvisualisierungsbereich 40.

Die Kopfzeile 11 enthält eine Angabe 12 über den Maschinentyp, Maschinennummer und die momentane Zeit; den Betriebszustandsknopf 13 zum Ändern des Betriebszustands der Ringspinnmaschine 1 (welcher im Basismodus schreibgeschützt sein kann); einen Hilfeknopf 14, um eine Hilfeseite bzw. ein Betriebshandbuch aufzurufen oder einen Screenshot zu erstellen; einen Sprachwahlknopf 15 zur Einstellung der Sprache der Benutzerschnittstelle der Bedienvorrichtung 9; einen Autorisierungsknopf 16 für den Zugriff auf eine Autorisierungsfunktion der Bedienvorrichtung 9 zum Autorisieren eines Benutzers und zum Abfragen von Informationen über den gegenwärtigen Benutzer; und einen Umschaltknopf 17 für den Zugriff auf eine Umschaltfunktion der Bedienvorrichtung 9 zum Umschalten der Bedienvorrichtung 9 vom Basismodus in einen Expertenmodus.

Der Benachrichtigungsbereich 20 kann eine oder mehrere der folgenden Meldungen enthalten: Alarmmeldungen, Warnmeldungen und Anzeige von Informationen. Beispiele dieser Meldung werden in den folgenden Figuren erläutert.

Der Betriebsdatenbereich 30 enthält eine Darstellung von Betriebsdaten der Ringspinnmaschine 1. Betriebsdaten der Maschine können Kennzahlen der Produktion umfassen wie den aktuellen Stand der Produktion betreffend Maschineneffizienz 31, "Machine Efficiency", Produktion pro Stunde bzw. Produktivität ggf. bezogen auf eine Schicht 32, "Production per h", Qualitätsstatus 33, "Quality CV", mittlere Zeitdauer zwischen Eingriffen 34, "MTBA" (Mean Time Between Assists), etc. Eine Einordnung der Betriebsdaten kann visuell unterstützt werden beispielsweise durch Farben und verschiedene Symbole, wie Smileys, etc., ob der Wert gut, mittel oder nicht gut ist. Die Betriebsdaten 31, 32, 33, 34 können als vom Benutzer anwählbare Elemente ausgeführt sein, um weitergehende Informationen anzuzeigen wie z.B. den Verlauf betreffender Betriebsdaten in Abhängigkeit der letzten Minuten, Stunden oder Tage.

Der Maschinenvisualisierungsbereich 40 enthält eine vereinfachte Darstellung 41 der Ringspinnmaschine 1, mit visuellen Statusinformationen über Materialien und laufende Prozesse; eine Rezeptanzeige 42 mit Informationen und insbesondere Namen des gegenwärtigen Rezepts; mehrere Schnellzugriffsknöpfe 43, 44, 45 für Arbeiten, die öfters durch den Arbeiter durchgeführt werden müssen; beispielsweise Umgang mit Material; Schnellzugriff zu Funktionen; einfache Problemlösung; einfache Reinigung der Maschine; oft wiederkehrende Bedienarbeiten der Maschine (z.B.: Kanne ausstossen, Material ansetzen...); Produktionsaufträge einstellen, starten und stoppen; etc. einen Schichtwechselknopf 46, der es erlaubt, anzugeben, welche Schicht aktiv ist; und - im Falle von Benachrichtigungen - Benachrichtigungssymbole, die direkt auf der vereinfachten Darstellung 41 der Maschine dargestellt werden.

Wie erwähnt, wird die Basisbedienmaske 10 gemäss Fig. 2 angezeigt, wenn die Bedienvorrichtung 9 in den Basismodus umgeschaltet ist. Die Bedienvorrichtung 9 kann ausgebildet sein, dass nach einem Neustart der Bedienvorrichtung 9 oder der Ringspinnmaschine 1 oder nach einer bestimmten Zeit ohne Interaktion eines Benutzers mit der Benutzerschnittstelle in den Basismodus umgeschaltet wird.

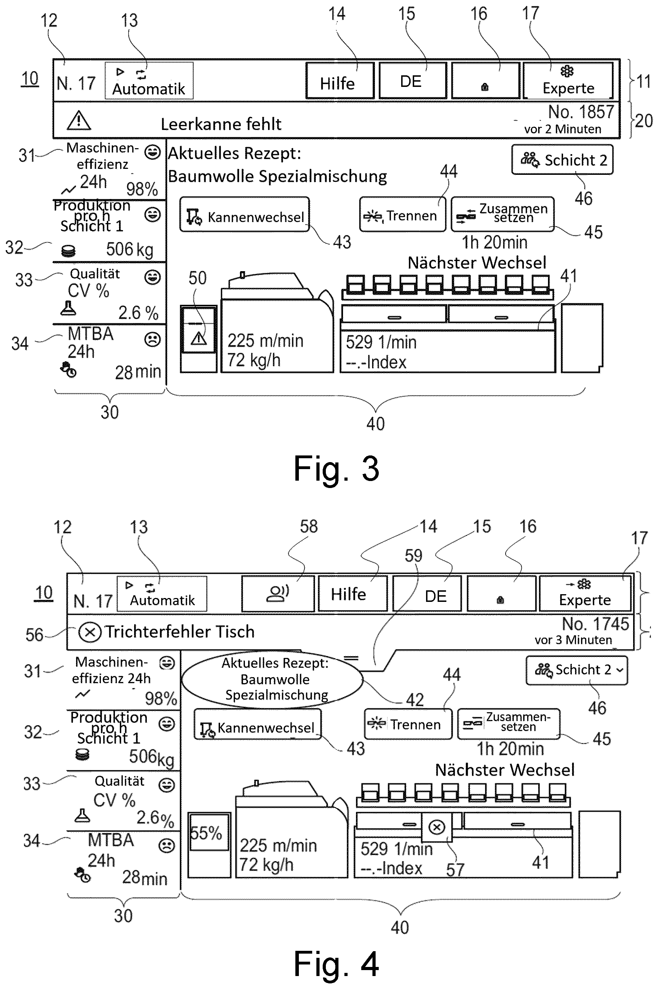

Fig. 3 zeigt schematisch die Basisbedienmaske 10 mit einer Warnmeldung "Empty can is missing" (es fehlt eine leere Kanne) im Benachrichtigungsbereich 20. Zur deutlicheren Visualisierung ist ein Symbol vorangestellt, welches ein in einem Dreieck angeordnetes Ausrufezeichen aufweist. Die Meldung, die farbig gestaltet sein kann, enthält eine Nummer "No. 1857" (Nr. 1857) und es wird angegeben, wann die Meldung angezeigt wurde "2 minutes ago" (vor zwei Minuten). Gleichzeitig ist auf der vereinfachten Darstellung 41 der Maschine eine Warnanzeige 50 angezeigt (z.B. ein farbiges Dreieck), welche die Stelle der Maschine angibt, worauf sich die Warnmeldung bezieht.

Fig. 4 zeigt schematisch die Basisbedienmaske 10 mit einer Alarmmeldung 56, "Table Funnel Error" (Fehler im Tischrichter) im Benachrichtigungsbereich 20. Zur deutlicheren Visualisierung ist ein Symbol vorangestellt, welches ein in einem Kreis angeordnetes Kreuz aufweist. Die Alarmmeldung 56 enthält eine Nummer "No. 1745" (Nr. 1745) und es wird angegeben, wann die Meldung angezeigt wurde "3 minutes ago" (vor drei Minuten). In der Kopfzeile 11 ist ein Serviceknopf 58 zum Benachrichtigen und Aufbieten eines Servicetechnikers aktiviert. Im Benachrichtigungsbereich 20 ist ein Knopf 59 aktiviert zum vereinfachten Anzeigen aller Benachrichtigungen (sofern es mehrere Benachrichtigungen gibt). Gleichzeitig umfasst die Darstellung 41 der Maschine eine Anzeige 57 (z.B. ein farbiger Kreis mit Kreuz) zur Angabe der Stelle der Maschine, worauf sich die Alarmmeldung bezieht.

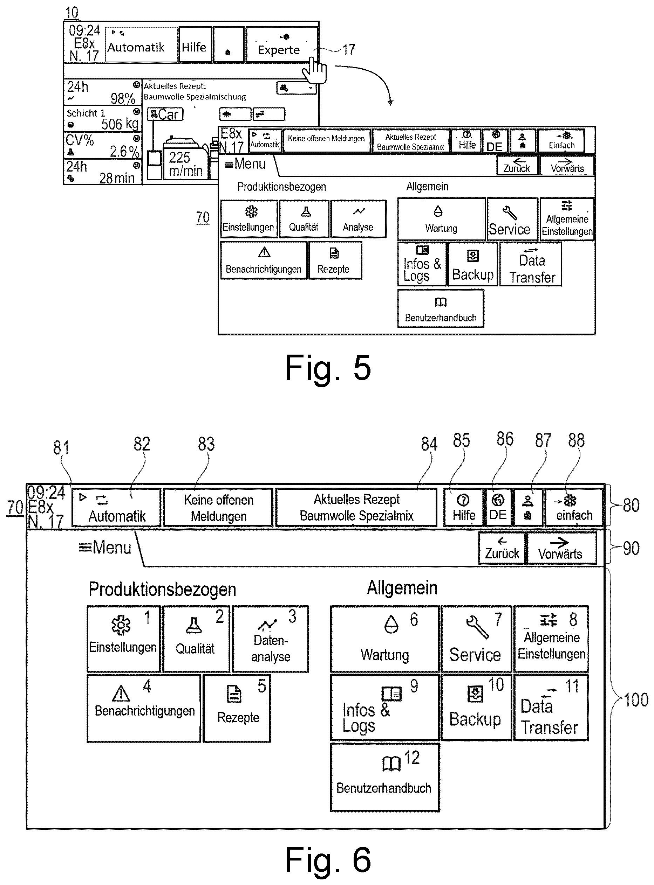

Fig. 5 zeigt schematisch die Betätigung des Umschaltknopfs 17 für den Zugriff auf die Umschaltfunktion zum Umschalten der Bedienvorrichtung 9 vom Basismodus in den Expertenmodus. Nach Betätigung des Umschaltknopfs 17 wird im Expertenmodus die Expertenbedienmaske 70 angezeigt.

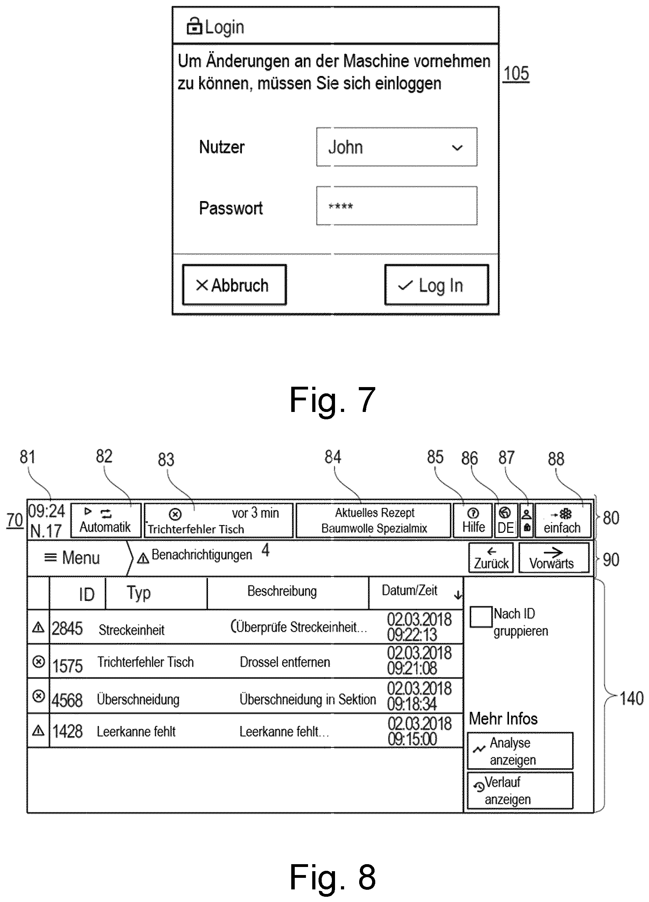

Das Umschalten vom Basismodus mit der angezeigten Basisbedienmaske 10 ("einfacher Modus") in den Expertenmodus mit der angezeigten Expertenbedienmaske 70 ("erweiterter Modus") kann ohne automatische Anmeldung bzw. Autorisierung erfolgen. Alle Benutzer können jederzeit zwischen den Modi wechseln. Allerdings können nur Benutzer mit den erforderlichen Rechten Änderungen an der Maschineneinstellung vornehmen. Die Bedienvorrichtung 9 fordert den Benutzer ggf. automatisch auf, sich zu autorisieren, wenn er eine Änderung vornehmen möchte (vgl. Fig. 7). Wenn der Benutzer die Expertenbedienmaske 70 verlässt und wieder zur Basisbedienmaske 10 bzw. Basismodus zurückkehrt, wird die Autorisierung des Benutzers automatisch zurückgesetzt bzw. der Benutzer automatisch ausgeloggt. In einer Ausführungsform geht die Bedienvorrichtung 9 nach einer bestimmten Zeit (einstellbar) ebenfalls automatisch zur Basisbedienmaske 10 bzw. zum Basismodus zurück. Die Basisbedienmaske 10 und Expertenbedienmaske 70 und die gesamte Visualisierung können vorteilhaft auf Webtechnologie (beispielsweise HTML5) basieren.

Fig. 6 zeigt schematisch die Expertenbedienmaske 70, welche die Bedienung der Textilmaschine T1 durch einen Benutzer im Expertenmodus zur Verfügung stellt, wobei weitergehende Einstellungen bzw. Informationen vorgenommen bzw. abgerufen werden können als mit der Basisbedienmaske 10 im Basismodus. Die Expertenbedienmaske 70 richtet sich an einen "Experten" wie z.B. einen Produktionsexperten, Qualitätsverantwortlichen, Servicetechniker etc. und bietet Zugriff auf die gesamte Maschinenfunktionalität und kann auch "erweiterter Modus" genannt werden. Die Expertenbedienmaske 70 ist an Aufgaben des "Experten" angepasst, welche beispielsweise umfassen: Änderung der Produktionseinstellungen, das Fine-tuning, die Optimierung der Maschine, das Qualitätsmanagement, eine komplexe Problemlösung, das Troubleshooting, die Organisation der Schicht, Support und Softwareupdates, etc.

Die Expertenbedienmaske 70 umfasst eine Kopfzeile 80, eine Navigationsleiste 90 und eine Menüübersicht 100. Die Kopfzeile 80 ist auf der Expertenbedienmaske 70 immer sichtbar. Es sind nur Informationen und Funktionen enthalten, die auf jedem Bildschirm notwendig sind. Eine Maschinenauswahl 81 umfasst eine Angabe über den Maschinentyp, Maschinennummer und die momentane Zeit umfasst. Ein Modus 82 zeigt den Betriebszustand und Modus der Maschine an. Der Modus 82 wie beispielsweise "Manual", "Automatic", "Service", etc. kann hier geändert werden. Durch Betätigen des Knopfes erscheint ein Dropdownmenu, durch das Einstellungen geändert werden können. Ein Benachrichtigungsknopf 83 zeigt die wichtigsten Benachrichtigungen an und ermöglicht einen direkten Zugang zu einer Benachrichtigungsliste (vgl. Fig. 8). Die Benachrichtigungen können unterschiedliche Farben haben. Ein Rezeptknopf 84 zeigt das aktuelle Rezept an. Durch Betätigen des Knopfes erscheint ein Dropdownmenu, mit welchem die folgenden Einstellungen geändert werden können: Speicher von Änderungen zu einem Rezept; Wiederherstellung eines Rezepts; Abspeichern aktueller Maschineneinstellungen als neues Rezept; Erzeugen von neuen Rezepten; Aufrufen der Rezeptliste; etc. Ein Hilfeknopf 85, welcher mit dem Hilfeknopf 14 der Basisbedienmaske 10 identisch sein kann. Es können aufgerufen werden: eine Hilfsseite, die über dem Hauptbildschirm liegt; ein Betriebshandbuch; eine Funktion um einen Screenshot von der Seite anfertigen; etc. Ein Sprachwahlknopf 85 ermöglicht die Einstellung der Sprache der Benutzerschnittstelle. Ein Autorisierungsknopf 87 ermöglicht das Autorisieren eines Benutzers, wie z.B. ein Ein- und Ausloggen, um den Benutzer zu wechseln und die Abfrage von Informationen über den gegenwärtigen Benutzer. Ein Umschaltknopf 88 ermöglicht die Betätigung der Umschaltfunktion der Bedienvorrichtung 9 zum Umschalten vom Expertenmodus in den Basismodus.

Die Navigationsleiste 90 der Expertenbedienmaske 70 zeigt immer den genauen aktuellen Standort des Benutzers in der Anwendung an. Es enthält immer mindestens die Übersichtsseite eines Hauptabschnitts, z. B. "Einstellungen". Sobald der Benutzer innerhalb einer Sektion navigiert, wird die nächste Navigations-Ebene angezeigt und die übergeordnete Ebene wird "aktiv", so dass der Benutzer mit einem Klick zur übergeordneten Ebene zurückkehren kann. An der linken Seite ist die Menüübersicht 100 direkt aufrufbar, an der rechten Seite sind Knöpfe zu Vorwärts- und Rückwärtsnavigieren.

Eine Menüübersicht 100 gibt Zugriff zu standardisierten Anwendungen, welche folgende Merkmale aufweisen können. Ein Einstellungsknopf 1, "Settings" ermöglicht den Zugriff auf alle Maschineneinstellungen, strukturiert nach Maschinenmodulen oder Prozess / Aufgabe (z. B. "Kanne", "Streckwerk", "Spinnmaschine", "Kämmaschine", usw.). Erweiterte Einstellungen können abhängig von der Benutzeranmeldungsebene einoder ausgeblendet werden. Ein Qualitätsknopf 2, "Quality" ermöglicht den Zugriff auf qualitätsbezogene Informationen und Einstellungen (z. B. Ziele, Toleranzstufen). Ein Datenanalyseknopf 3 ermöglicht den Zugriff auf Informationen und eine Analyse der laufenden Produktion sowie Trends, strukturiert nach Themen (z. B. "Effizienz", "Energie"), mit der Möglichkeit der Berichterstattung. Ein Benachrichtungsknopf 4, "Notifications" ermöglicht den Zugriff auf eine Liste der aktiven Benachrichtigungen sowie einen Link zum Benachrichtigungsverlauf und zur Analyse. Ein Rezeptknopf 5, "Recipes" ermöglicht den Zugriff auf eine Liste aller gespeicherten Rezepte mit Verwaltungsmöglichkeiten (z. B. Duplizieren, Löschen usw.). Ein Serviceknopf 6, "Maintenance" ermöglicht den Zugriff auf Inbetriebnahme- / Fehlerbehebungsfunktionen, z.B. I/O-Tests, Sensoren, manuelle Funktionen, etc. Ein Wartungsknopf 7, "Service" ermöglicht den Zugriff auf Wartungseinstellungen, ausstehende Aufgaben, Historie, etc. Ein Knopf für allgemeine Einstellungen 8, "General Settings" ermöglicht Produktionsrelevante Einstellungen und Einstellungen, die nicht direkt mit der Produktion zusammenhängen. Diese können zwischen Maschinen übertragbar sein und können umfassen: Netzwerkeinstellungen; Benutzerverwaltung; Einstellungen verschieben; Einstellungen anzeigen; Einheiten und Maßnahmen; Uhrzeit und Datum; Sprache und Tastatur; Software und Lizenzierung; Einfache Moduseinstellungen; Lampenkonfiguration (falls für dieses Gerät verfügbar); Hupenkonfiguration (falls für dieses System verfügbar); etc. Ein Knopf für das Benutzerhandbuch 12, "User Manual" ermöglicht den Zugriff auf ein komplettes Benutzerhandbuch mit Suchmöglichkeiten. Ein Knopf für Infos & Logs 9, "Infos & Logs" ermöglicht den Zugriff auf allgemeine Informationen über die Maschine (z. B. Betriebsstunden) und detaillierte, filterbare Listen aller Ereignisse, die auf dem Gerät protokolliert werden. Ein Backupknopf 10, "Backup" stellt den Zugriff auf verschiedene Backup-Möglichkeiten zur Verfügung. Ein Datenübertragungsknopf 11, "Data Transfer" stellt Datentransfermöglichkeiten zur Verfügung zum / vom Gerät, mit einer Liste möglicher Datensätze, die übertragen werden sollen. Hinweis: Allgemeine Maschineninformationen (z. B. Maschinennummer) müssen immer in einer Übertragung enthalten sein, um die Daten eindeutig zu identifizieren.

Fig. 7 zeigt eine Dialogmaske 105 zum Autorisieren eines Benutzers bzw. zum Einloggen eines Benutzers, wobei ein Benutzername und ein Passwort abgefragt werden. Das Gerät fordert den Benutzer automatisch auf, sich einzuloggen, wenn er eine Änderung vornehmen möchte. Es ist auch denkbar, dass sich ein Benutzer mit einem RFID-Tag an der Maschine einloggt. Die Autorisierung eines Benutzers kann das Zuordnen einer Berechtigungsstufe umfassen, wobei einem Schichtleiter eine höhere Berechtigungsstufe zugeordnet sein kann als einer einfachen Bedienperson einer Maschine.

Nachdem sich ein Benutzer autorisiert hat, kann die Autorisierung des Benutzers durch Betätigung des Autorisierungsknopfs 87 wieder rückgängig gemacht werden bzw. der Benutzer kann sich ausloggen. Wenn der Benutzer die Expertenbedienmaske 70 verlässt und wieder zur Basisbedienmaske 10 zurückkehrt, kann der Benutzer automatisch ausgeloggt werden. Nach einer bestimmten Zeit (einstellbar) kann das Gerät ebenfalls automatisch zur Basisbedienmaske 10 bzw. in den Basismodus zurückkehren. Die Bedienvorrichtung kann eingerichtet sein, dass nach einem Neustart der Maschine oder einer Unterbrechung der Stromversorgung in den Basismodus umgeschaltet wird.

Fig. 8 zeigt eine Liste 140 mit möglichen Benachrichtigungen, welche vom System ausgelöste Nachrichten an den Benutzer umfassen und erscheinen, wenn eine Benutzerinteraktion bzw. eine Information des Benutzers erforderlich ist. Es gibt drei wesentliche Arten von Benachrichtigungen. Alarme werden ausgelöst bei schweren Problemen, die ggf. einen Maschinenstopp erfordern oder verursachen. Warnungen werden ausgelöst bei Problemen, die zu einem Alarm führen können, wenn keine Aktion ausgelöst wird. Informationen beziehen sich auf unkritische Benachrichtigungen, die den Benutzer über zukünftige Interventionserfordernisse informieren können.

Die Handhabung von Benachrichtigungen funktioniert auf der Basisbedienmaske 10 als auch auf der Expertenbedienmaske 70 ähnlich, es variiert nur die Detailebene. Benachrichtigungen können über vier Elemente gehandhabt werden. Ein erstes Element bezieht sich auf ein In-Kontext-Benachrichtigungssymbol (z. B. Warnsymbol am Maschinenmodell, vgl. Fig. 2). Ein Klick auf das Symbol öffnet das Benachrichtigungsdetail als Overlay. Ein zweites Element bezieht sich auf einen Benachrichtigungsknopf 83 in der Kopfzeile 80 mit der letzten oder wichtigsten Benachrichtigung. Ein Klick auf den Bereich öffnet die Benachrichtigungsliste 140. Ein drittes Element bezieht sich auf eine Benachrichtigungsliste 140, die alle ausstehenden Benachrichtigungen enthält, die Benutzereingriffe erfordern (d.h. Alarm, Warnungen, Wartung). Ein Klick auf eine der Benachrichtigungen öffnet ein Benachrichtigungsdetail als Overlay. Ein viertes Element bezieht sich auf die Darstellung eines Benachrichtigungsdetails als Overlay mit detaillierten Informationen zur Benachrichtigung (z.B. HTML-Auszug aus dem Benutzerhandbuch zu dieser Benachrichtigungsart) sowie Lösungsmöglichkeiten und direktem Zugriff auf das vollständige Benutzerhandbuch.

Die Elemente der Basisbedienmaske 10 und/oder der Expertenbedienmaske 70 können abhängig sein von einer Autorisierung eines Benutzers bzw. einer Berechtigungsstufe eines Benutzers.

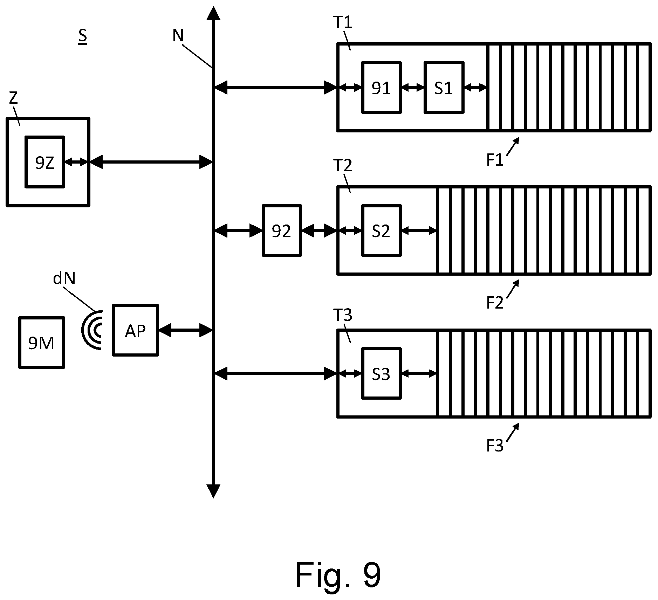

Fig. 9 zeigt schematisch eine Spinnerei S umfassend ein Kommunikationsnetz N und daran angeschlossene Geräte/Maschinen. Im in der Fig. 9 gezeigten Beispiel beziehen sich die Geräte/Maschinen auf insgesamt drei Textilmaschinen T1, T2, T3. Ferner zeigt Fig. 9 schematisch eine Spinnereizentrale Z und ein Zugangspunkt AP für ein drahtloses Kommunikationsnetz dN. Die Spinnerei S kann andere Konfigurationen aufweisen, beispielsweise weitere oder weniger Textilmaschinen, weitere Kommunikationsnetze, weitere Zugangspunkte und drahtlose Kommunikationsnetze, etc. Die Textilmaschinen können in der Form von Spinnereivorbereitungsmaschinen ausgeführt sein, wie z.B. Ballenöffner, Strecke, Karde, Kämmmaschine, etc. Die Textilmaschinen können in der Form von Endspinnmaschinen ausgeführt sein, wie z.B. Ringspinnmaschinen, Rotorspinnmaschinen, Luftspinnmaschinen, Flyer, Winder, etc. Wie in Fig. 9 illustriert, weisen die Textilmaschinen T1, T2, T3 entsprechende Funktionseinheiten F1, F2, F3 auf, sowie Steuervorrichtungen S1, S2, S3 zur Steuerung der Textilmaschinen T1, T2, T3. Die Funktionseinheiten können sich beispielsweise auf die in Fig. 1 gezeigten Funktionseinheiten 2 der Ringspinnmaschine 1 beziehen bzw. auf Funktionseinheiten betreffender Ausführungsformen von Textilmaschinen. Die Steuerungsvorrichtungen S1, S2, S3 können in der Form von programmierbaren Steuerungen (PLC: Programmable Logic Controller) ausgeführt sein. Die Steuerungsvorrichtungen S1, S2, S3 können Datenbanken umfassen und/oder eingerichtet sein für den Zugriff auf Datenbanken der Textilmaschinen T1, T2, T3, der Spinnereizentrale Z, etc.

An einer ersten Textilmaschine T1 ist eine erste Bedienvorrichtung 91 angeordnet und mit dem Kommunikationsnetz N verbunden. Die erste Bedienvorrichtung 91 ist beispielsweise an der ersten Textilmaschine T1 angebracht und umfasst beispielsweise einen an der ersten Textilmaschine T1 angebrachten Touchscreen. Die erste Bedienvorrichtung 91 ist mit der Steuerungsvorrichtung S1 der ersten Textilmaschine T1 verbunden, beispielsweise über einen Kommunikationsbus.

Einer zweiten Textilmaschine T2 ist eine zweite Bedienvorrichtung 92 zugeordnet und mit dem Kommunikationsnetz N verbunden. Die zweite Bedienvorrichtung 92 ist beispielsweise an einem Bedienpult angebracht, welches in Sichtdistanz zur zweiten Textilmaschine T2 aufgestellt ist. Die zweite Bedienvorrichtung 92 ist mit der Steuerungsvorrichtung S2 der zweiten Textilmaschine T2 verbunden, beispielsweise über ein Kommunikationskabel. In einer Ausführungsform kann die Steuerungsvorrichtung S2 in der Bedienvorrichtung 92 integriert sein.

In einer Ausführungsform können die Steuerungsvorrichtungen S1,S2 und die Bedienvorrichtungen 91,92 in jeweils in einer einzelnen Einheit angeordnet sein, beispielsweise können die Bedienvorrichtungen 91, 92 jeweils die betreffenden Steuervorrichtungen S1, S2 umfassen.

Eine dritte Textilmaschine T3 weist eine Steuerungsvorrichtung S3 auf, welche mit dem Kommunikationsnetz N verbunden ist. Im Gegensatz zur ersten und zweiten Textilmaschine T1, T2, ist der dritten Textilmaschine T3 keine Bedienvorrichtung zugeordnet.

Neben den Bedienvorrichtungen 91, 92 können die Textilmaschinen T1, T2, T3 weitere Bediengeräte umfassen, beispielsweise einen Notschalter zum Ausschalten der Textilmaschine, einen Beleuchtungsschalter zum Einschalten einer Beleuchtung, etc.

Die Spinnereizentrale Z umfasst ein Computersystem mit Prozessoren, Software, Datenbanken, etc. zur Steuerung, Überwachung, etc. der Spinnerei S, welches Computersystem beispielsweise in einem baulich abgetrennten Raum angeordnet sein kann. Die Software der Spinnereizentrale Z umfasst Anwendungen, welche Informationen und/oder Daten von Textilmaschinen, Hilfsspinnvorrichtungen wie Luftdrucksystemen, Transportsystemen, Klimatisierungssystemen, Sensoren, Sicherheits- und Überwachungssystemen, etc. erfassen können, analysieren können, visualisieren können, vorausschauende und/oder normative Analysen bereitstellen können, adaptive Steuerungsfunktionen auslösen können, etc. Die Spinnereizentrale Z kann Einstellungen, z.B. spezifizierte oder gewünschte Werte, an die Textilmaschinen T1, T2, T3 übertragen. Die Spinnereizentrale Z umfasst eine Bedienvorrichtung 9Z zur Einstellung von Funktionen der Spinnereizentrale Z. Die Bedienvorrichtung 9Z umfasst beispielsweise einen Touchscreen, einen Monitor mit Tastatur/Maus, etc.

Wie in Fig. 9 illustriert, ist ein Zugangspunkt AP mit dem Kommunikationsnetz N verbunden. Der Zugangspunkt AP stellt ein drahtloses Kommunikationsnetz dN zur Verfügung zur Erstellung einer Kommunikationsverbindung mit einem mobilen Bediengerät 9M. Das mobile Bediengerät 9M kann beispielsweise als Tablet-Computer, Mobiltelefone, etc. ausgeführt sein.

Das Kommunikationsnetz N kann in der Form eines Ethernet, etc. ausgeführt sein. Das drahtlose Kommunikationsnetz dN kann in der Form eines WiFi Netzwerks, etc. ausgeführt sein. Die Kommunikation über das Kommunikationsnetz N und/oder das drahtlose Kommunikationsnetz dN kann in der Form einer IP Kommunikation (IP: Internet Protocol), etc. erfolgen.

Die Bedienvorrichtungen 91, 92, die Bedienvorrichtung 9Z der Spinnereizentrale Z, das mobile Bediengerät 9M, die Steuervorrichtungen S1, S2, S3 können über das Kommunikationsnetz N und ggf. das drahtlose Kommunikationsnetz dN untereinander kommunizieren. Ggf. ist die Kommunikation zu und von den Steuervorrichtungen S1, S2 nur indirekt über die Bedienvorrichtungen 91, 92 möglich.

Die Bedienvorrichtungen 91, 92 der ersten und zweiten Textilmaschinen T1, T2 weisen die oben geschilderten Merkmale der Bedienvorrichtung 9 der Ringspinnmaschine 1 auf. Ferner können auch die Bedienvorrichtung 9Z der Zentrale und/oder die mobile Bedienvorrichtung 9M diese Merkmale aufweisen. Eine betreffende Bedienvorrichtung, beispielsweise die Bedienvorrichtung 91 der ersten Textilmaschine T1, weist eine Umschaltfunktion auf zum Umschalten der Bedienvorrichtung 91 zwischen einem Basismodus und einem Expertenmodus. Der Basismodus stellt eine Basisbedienung der Textilmaschine T1 zur Verfügung und der Expertenmodus stellt eine Expertenbedienung der Textilmaschine T1 zur Verfügung. Beispielsweise stellt die Bedienvorrichtung 91 die oben geschilderte Basisbedienmaske 10 zur Verfügung und im Expertenmodus die ebenfalls oben geschilderte Expertenbedienmaske 70. Die Bedienvorrichtung 91 weist eine Autorisierungsfunktion auf zum Autorisieren eines Benutzers. Die Umschaltfunktion ist ausgebildet, für das Umschalten in den Expertenmodus einen autorisierten Benutzer vorauszusetzen. Beispielsweise erfolgt die Autorisierung über eine oben geschilderte Dialogmaske 105, welche ein Einloggen eines Benutzers ermöglicht. Beispielsweise kann nach einer Autorisierung eines Benutzers ein dem Benutzer zugeordnetes Benutzerprofil aktiviert werden, wobei der Expertenmodus abhängig vom Benutzerprofil ausgestaltet sein kann, sodass einem Benutzer diejenigen Funktionen zur Bedienung der Maschine zur Verfügung gestellt werden können, auf die der Benutzer gemäss seinen Aufgaben Zugriff haben muss. Die Bedienvorrichtung 91 weist eine Remote-Sendefunktion auf zum Erstellen einer Kommunikationsverbindung zu einer entfernten Bedienvorrichtung 92 einer entfernten Textilmaschine T2 oder zu einer entfernten Steuervorrichtung S2, S3 einer entfernten Textilmaschine T2, T3 zur Steuerung der entfernten Textilmaschine T2, T3. Die Bedienvorrichtung 91 weist eine Remote-Empfangsfunktion auf zum Empfang einer Kommunikationsverbindung von einer entfernten Bedienvorrichtung 92, 9Z, 9M zur Steuerung der Textilmaschine T1. Kommunikationsverbindungen können beispielsweise über das Kommunikationsnetz N erstellt werden.

Somit kann einem Benutzer an der Bedienvorrichtung 91 der ersten Textilmaschine T1 eine Basisbedienmaske der Bedienvorrichtung 92 der zweiten Textilmaschine T2 zur Verfügung gestellt sein zur Bedienung der zweiten Textilmaschine T2 im Basismodus. Ferner kann einem entfernten Benutzer an der Bedienvorrichtung 92 der zweiten Textilmaschine T2 eine Basisbedienmaske der Bedienvorrichtung 91 der ersten Textilmaschine T1 zur Verfügung gestellt sein zur Bedienung der ersten Textilmaschine T1 im Basismodus.

Somit kann einem autorisierten Benutzer an der Bedienvorrichtung 91 der ersten Textilmaschine T1 eine Expertenbedienmaske der Bedienvorrichtung 92 der zweiten Textilmaschine T2 zur Verfügung gestellt sein zur Bedienung der zweiten Textilmaschine T2 im Expertenmodus. Ferner kann einem entfernten autorisierten Benutzer an der Bedienvorrichtung 92 der zweiten Textilmaschine T2 eine Expertenbedienmaske der Bedienvorrichtung 91 der ersten Textilmaschine T1 zur Verfügung gestellt sein zur Bedienung der ersten Textilmaschine T1 im Expertenmodus.

In analoger Weise kann vorgesehen sein, dass einem entfernten Benutzer bzw. einem entfernten autorisierten Benutzer eine Basisbedienmaske bzw. eine Expertenbedienmaske an der Bedienvorrichtung BZ der Spinnereizentrale BZ oder an der mobilen Bedienvorrichtung BM zur Verfügung gestellt ist zur Bedienung der ersten Textilmaschine T1 im Basismodus bzw. Expertenmodus.

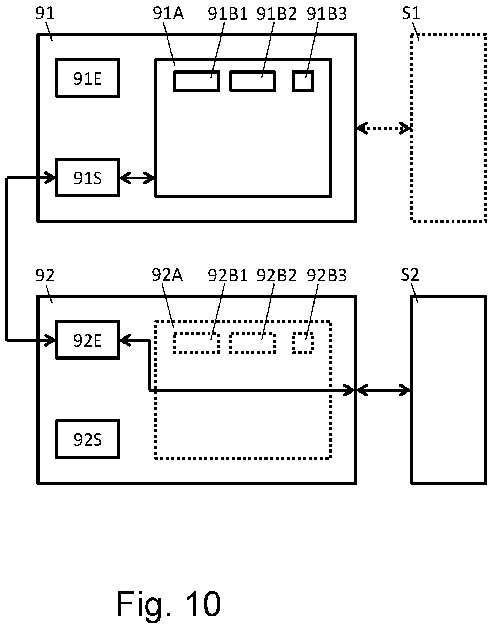

Fig. 10 illustriert schematisch eine Anordnung mit zwei Bedienvorrichtungen 91, 92 zur Bedienung der Steuervorrichtungen S1, S2 von Textilmaschinen, wobei zur Bedienung einer zweiten Textilmaschine eine erste Bedienvorrichtung 91 mit der Steuervorrichtung S2 der zweiten Textilmaschine verbunden ist. Die Bedienvorrichtungen 91, 92 umfassen jeweils eine Remote-Sendefunktion 91S, 92S und eine Remote-Empfangsfunktion 91E, 92E. Die Remote-Sendefunktion 91S der ersten Bedienvorrichtung 91 hat eine Kommunikationsverbindung erstellt zur Bedienvorrichtung 92 der zweiten

Textilmaschine, welche Kommunikationsverbindung von der Remote-Empfangsfunktion 92E der zweiten Bedienvorrichtung 92 empfangen wird. Die Bedienvorrichtungen 91, 92 umfassen Anzeigen 91A, 92A zur Anzeige von Bedienmasken mit Bedienelementen 91B1, 91B2, 91B3, 92B1, 92B2, 92B3, insbesondere die oben geschilderte Basisbedienmaske 10 und die oben geschilderte Expertenbedienmaske 70. Die Bedienung der Steuervorrichtung S1 der ersten Textilmaschine durch die Bedienvorrichtung 91 ist ausgesetzt. Dies ist in Fig. 10 durch gestrichelte Linien schematisch illustriert. Die Anzeige 92A der Bedienvorrichtung 92 der zweiten Textilmaschine ist ausgesetzt. Dies ist in Fig. 10 durch gestrichelte Linien schematisch illustriert. Die Bedienung der Steuervorrichtung S2 der zweiten Textilmaschine erfolgt über die Auswahl von auf der Anzeige 91A dargestellten Bedienelementen 91B1, 91B2, 91B3, beispielsweise mittels Touchscreen oder Maus, und der Übermittlung entsprechender Informationen/Daten über die Remote-Sendefunktion 91S der Bedienvorrichtung 91, die Remote-Empfangsfunktion 92E der Bedienvorrichtung 92 an die Steuervorrichtung S2 der zweiten Textilmaschine.

In einer Ausführungsform kann vorgesehen sein, dass jeweils nur ein Benutzer autorisiert sein kann zur Bedienung einer Textilmaschine T1, T2. Für andere Benutzer kann gleichwohl ein schreibgeschützter Modus (read-only) zur Verfügung stehen. Der schreibgeschützte Modus kann bei der betreffenden Bedienvorrichtung anhand einer Codierung angezeigt sein, z.B. über einen farbigen Rahmen und/oder durch Markierung einer Schaltfläche.

In einer Ausführungsform kann ein Handshake-Verfahren vorgesehen sein, damit ein Benutzer die Autorisierung eines autorisierten Benutzers übernehmen kann. Beispielsweise kann dem autorisierten Benutzer eine entsprechende Meldung angezeigt werden, dass ein anderer Benutzer die Autorisierung übernehmen möchte. Der autorisierte Benutzer kann darauf reagieren, indem er die Autorisierung des anderen Benutzers bestätigt und seine eigene Autorisierung aufgibt oder indem er die Autorisierung des anderen Benutzers verweigert und seine eigene Autorisierung beibehält. Es kann vorgesehen sein, dass ein Benutzer nach einem vorgegebenen Zeitintervall die Autorisierung auch ohne Reaktion des autorisierten Benutzers übernehmen kann, beispielsweise falls sich der autorisierte Benutzer nicht mehr bei der Bedienvorrichtung befindet. Das Handshake-Verfahren kann abhängig sein von Berechtigungsstufen betreffender Benutzer, wobei es gesperrt sein kann, dass ein Benutzer mit einer niedrigen Berechtigungsstufe gegenüber einem Benutzer mit höherer Berechtigungsstufe das Handshake-Verfahren auslösen kann. Einem Benutzer welcher das Handshake-Verfahren auslöst kann der Benutzer angezeigt werden, von welchem die Autorisierung übernommen wird, wobei der Benutzer das Handshake-Verfahren ggf. abbrechen kann. Ein Benutzer kann die Übernahme der Autorisierung ggf. für eine bestimmte Zeitdauer oder eine bestimmte Anzahl Anfragen ablehnen, wobei danach die Übernahme der Autorisierung nicht mehr abgelehnt werden kann.

In einer Ausführungsform kann vorgesehen sein, dass einer Bedienvorrichtung 91, 92 einer betreffenden Textilmaschine T1, T2 eine höhere Priorität zugeordnet ist als anderen Bedienvorrichtungen 91, 92, 9Z, 9M, wobei ein Benutzer der betreffenden Bedienvorrichtung 91, 92 die von einer anderen Bedienvorrichtung 91, 92, 9Z, 9M stammende Autorisierung eines entfernten Benutzers auch ohne das erwähnte Handshake-Verfahren übernehmen. Es kann vorgesehen sein, dass dem lokalen Benutzer angezeigt wird, dass ein entfernter Benutzer autorisiert ist und dass vom lokalen Benutzer eine Bestätigung zur Aufhebung der Autorisierung des entfernten Benutzers verlangt wird.

In einer Ausführungsform kann vorgesehen sein, dass die Bedienung durch entfernte Benutzer eingeschränkt oder gesperrt ist. Dies kann in konfigurierbarer Weise ausgeführt sein und kann abhängig davon sein: welche Bedienvorrichtungen 91, 92, 9Z, 9M involviert sind, ob der lokale oder entfernte Benutzer den Basismodus oder den Expertenmodus ausgewählt hat, etc. Beispielsweise kann vorgesehen sein, dass eine Putzereisteuerung wie UNIcontrol nur von einem lokalen Benutzer einer Bedienvorrichtung bedient werden kann, während dies für einen entfernten Benutzer gesperrt ist. Beispielsweise kann vorgesehen sein, dass Alarme nur von einem lokalen Benutzer bestätigt werden können, während Alarme einem entfernten Benutzer zwar angezeigt werden können, aber eine Bestätigung für den entfernten Benutzer gesperrt ist. Beispielsweise kann vorgesehen sein, dass Alarme nur an der Bedienvorrichtung 9Z der Zentrale bestätigt werden können, aber nicht an den Bedienvorrichtungen 91, 92 der ersten oder zweiten Textilmaschine T1, T2. Beispielsweise kann vorgesehen sein, dass das Übertragen von vorgegebenen Einstellungen/Dateien von der Bedienvorrichtung 9Z der Spinnereizentrale Z an eine Bedienvorrichtung 91, 92 der ersten oder zweiten Textilmaschine T1, T2 oder an Steuervorrichtungen S1, S2, S3 der Textilmaschinen T1, T2, T3 unabhängig ist von der Autorisierung eines Benutzers, wobei das Aktivieren betreffender Einstellungen/Dateien einen autorisierten Benutzer voraussetzt. Solche Einstellungen/Dateien können sich auf Benutzereinstellungen, Schichteinstellungen, Rezepteinstellungen, etc. beziehen.

In einer Ausführungsform kann vorgesehen sein, dass die Remote-Sendefunktion und/oder die Remote-Empfangsfunktion der Bedienvorrichtungen 91, 92, 9Z, 9M deaktivierbar sind. Beispielsweise im Fall von Wartungsarbeiten an der ersten Textilmaschine T1 kann die Remote-Empfangsfunktion der Bedienvorrichtung 91 der ersten Textilmaschine T1 deaktiviert werden, um eine Störung der Wartungsarbeiten durch einen entfernten Benutzer zu verhindern. Beispielsweise kann das Deaktivieren der Remote-Sendefunktion und/oder der Remote-Empfangsfunktion abhängig sein von den involvierten Bediengeräten. So kann beispielsweise die Remote-Empfangsfunktion der Bedienvorrichtung 91 der ersten Textilmaschine T1 für die Bedienvorrichtung 92 der zweiten Textilmaschine T2 deaktiviert sein, während diese für die Bedienvorrichtung 9Z der Spinnereizentrale Z weiterhin aktiviert ist.

In einer Ausführungsform kann vorgesehen sein, dass einem entfernten Benutzer gegenüber dem lokalen Benutzer eine übergeordnete Berechtigungsstufe zugeordnet ist, beispielsweise einem Schichtleiter, wobei der entfernte Benutzer den lokalen Benutzer, beispielsweise eine wenig erfahrene Bedienperson, in den read-only Modus oder den Basismodus versetzen kann sowie die Bedienung im Expertenmodus aktivieren kann, wobei gegenseitige Warnmeldungen vorgesehen sein können.

In einer Ausführungsform kann vorgesehen sein, dass ein lokaler Benutzer nach der Autorisierung alle anderen Berechtigungen von anderen Benutzern zurücksetzen kann, damit beispielsweise eine dringend an der Maschine erkannte Massnahme vorgenommen oder eine Störung/Fehleinstellung behoben werden kann, welche von einem entfernten Benutzer nicht erkannt werden können.

In einer Ausführungsform kann vorgesehen sein, dass der Spinnereizentrale eine höchste Priorität zugeordnet sein kann und die Berechtigung eines lokalen oder entfernten Benutzers einer Bedienvorrichtung zurücksetzen kann, um die Bedienung einer Textilmaschine vollständig zu übernehmen.

In einer Ausführungsform kann vorgesehen sein, dass ein Benutzer nach der Autorisierung Zugriff auf erweitere Informationen/Einstellungen einer betreffenden Maschine gewährt wird, wobei die Veränderung von Informationen/Einstellungen eingeschränkt sein kann oder vollständig freigegeben sein kann.

**In** einer Ausführungsform kann vorgesehen sein, dass die Bedienvorrichtungen einen Standby Modus einnehmen können, beispielsweise nach Ablauf eines Zeitintervalls ohne Bedienung durch einen Benutzer, wobei keine oder eingeschränkte Informationen/Einstellungen der Maschine angezeigt werden. Nach der Autorisierung eines Benutzers kann der Zugriff auf Informationen/Einstellungen der Maschine abhängig von einer Berechtigungsstufe des Benutzers sein, insbesondere auch abhängig davon, ob der Benutzer den Basismodus oder den Expertenmodus auswählt, wobei im Expertenmodus eine erweiterter Zugriff gewährt sein kann, um Veränderungen an Informationen/Einstellungen vorzunehmen.

In einer Ausführungsform kann vorgesehen sein, dass die Bedienung einer Textilmaschine von einer Softwareanwendung wie z.B. ESSENTIAL übernommen wird, wobei ein lokaler oder entfernter Benutzer ggf. gewarnt wird oder die Möglichkeit angeboten wird, die Bedienung durch die Softwareanwendung zu unterbinden oder einzuschränken.

### Bezugszeichenliste

| | | | |
|---|---|---|---|
| 1 | Ringspinnmaschine | 17 | Umschaltknopf zum Umschalten vom Basismodus in den Expertenmodus |
| x | Längsrichtung der Ringspinnmaschine | | |
| 2 | Spinnstellen | 20 | Benachrichtigungsbereich |
| 3₁ | Kopf der Ringspinnmaschine 1 | 30 | Betriebsdatenbereich |
| 3₂ | Fuss der Ringspinnmaschine 1 | 31 | Anzeige der Maschineneffizienz |
| 4 | Vorgarnspule | 32 | Anzeige der Schicht |
| 5 | Streckwerk | 33 | Anzeige des Qualitätsstatus |
| 6 | Vorgarn | 34 | Anzeige der mittleren Zeitdauer zwischen Eingriffen |
| 7 | Kops | 40 | Maschinenvisualisierungsbereich |
| 8 | Spindel | 41 | Darstellung der Maschine |
| 9 | Bedienvorrichtung | 42 | Rezeptanzeige |
| 10 | Basisbedienmaske | 43, 44,45 | Schnellzugriffsknöpfe |
| 11 | Kopfzeile | 50 | Warnanzeige |
| 12 | Maschinenauswahl | 56 | Alarmmeldung |
| 13 | Betriebszustandsknopf | 57 | Anzeige zur Angabe der Stelle worauf sich die Alarmmeldung bezieht |
| 14 | Hilfeknopf | | |
| 15 | Sprachwahlknopf | 58 | Serviceknopf |
| 16 | Autorisierungsknopf | 59 | Knopf zum verinfachten Anzeigen der Benachrichtigungen |
| 70 | Expertenbedienmaske | 105 | Dialogmaske zum Autorisieren eines Benutzers |
| 80 | Kopfzeile | | |
| 81 | Maschinenauswahl | 140 | Liste mit Benachrichtigungen |
| 82 | Modus der Maschine | T1, T2, T3 | Textilmaschinen |
| 83 | Benachrichtigungsknopf | Z | Spinnereizentrale |
| 84 | Rezeptknopf | N | Kommunikationsnetz |
| 85 | Hilfeknopf | dN | drahtlosese Kommunikationsnetzwerk |
| 86 | Sprachwahlknopf | AP | Access Point |
| 87 | Autorisierungsknopf | 91, 92 | Bedienvorrichtungen der Textilmaschinen |
| 88 | Umschaltknopf zum Umschalten vom Expertenmodus in den Basismodus | | |
| | | S1, S2, S3 | Steuervorrichtungen der Textilmaschinen |
| 90 | Navigationsleiste | 9Z | Bedienvorrichtung der Spinnereizentrale |
| 100 | Menüübersicht | 9M | mobile Bedienvorrichtung |

## Patentansprüche

1. Bedienvorrichtung (91) zur Bedienung von Textilmaschinen (T1, T2, T3),
wobei die Bedienvorrichtung (91) eine Umschaltfunktion aufweist zum Umschalten der Bedienvorrichtung (91) zwischen einem Basismodus und einem Expertenmodus, wobei der Basismodus eine Basisbedienmaske (10) zur Basisbedienung einer Textilmaschine (T1) durch einen Benutzer zur Verfügung stellt und der Expertenmodus eine Expertenbedienmaske (70) zur Expertenbedienung der Textilmaschine (T1) durch den Benutzer zur Verfügung stellt,
wobei die Bedienvorrichtung (91) eine Autorisierungsfunktion aufweist zum Autorisieren des Benutzers und die Umschaltfunktion ausgebildet ist, für das Umschalten in den Expertenmodus die Autorisierung des Benutzers vorauszusetzen,
wobei die Bedienvorrichtung (91) eine Remote-Sendefunktion (91S) aufweist zur Bedienung einer entfernten Textilmaschine (T2, T3) durch den Benutzer, welche Remote-Sendefunktion (91S) ausgebildet ist zum Erstellen einer Kommunikationsverbindung zu der entfernten Textilmaschine (T2, T3) zur Bedienung der entfernten Textilmaschine (T2, T3) durch den Benutzer, und
wobei die Bedienvorrichtung (91) eine Remote-Empfangsfunktion (91E) aufweist zur Bedienung der Textilmaschine (T1) durch einen entfernten Benutzer, welche Remote-Empfangsfunktion (91E) ausgebildet ist zum Empfang einer Kommunikationsverbindung von einer entfernten Bedienvorrichtung (92, 9Z, 9M) zur Bedienung der Textilmaschine (T1) durch den entfernten Benutzer.

2. Bedienvorrichtung (91) nach Anspruch 1, wobei die Remote-Sendefunktion (91S) ausgebildet ist, die Kommunikationsverbindung zu der entfernten Textilmaschine (T2, T3) über eine Bedienvorrichtung (92) oder über eine Steuervorrichtung (S2, S3) der entfernten Textilmaschine (T2, T3) zu erstellen.

3. Bedienvorrichtung (91) nach einem der vorangegangenen Ansprüche, wobei die Remote-Sendefunktion (91S) ausgebildet ist, für das Erstellen der Kommunikationsverbindung die Autorisierung des Benutzers vorauszusetzen.

4. Bedienvorrichtung (91) nach einem der vorangegangenen Ansprüche, wobei die Remote-Sendefunktion (91S) ausgebildet ist, für das Erstellen der Kommunikationsverbindung den Expertenmodus vorauszusetzen.

5. Bedienvorrichtung (91) nach einem der vorangegangenen Ansprüche, wobei die Remote-Sendefunktion (91S) ausgebildet ist, für das Erstellen der Kommunikationsverbindung eine Berechtigungsüberprüfung auszuführen.

6. Bedienvorrichtung (91) nach einem der vorangegangenen Ansprüche, wobei die Remote-Sendefunktion (91S) ausgebildet ist, mehrere Kommunikationsverbindungen zu erstellen zur Bedienung von mehreren entfernten Textilmaschinen (T2, T3).

7. Bedienvorrichtung (91) nach einem der vorangegangenen Ansprüche, wobei die Remote-Empfangsfunktion (91E) ausgebildet ist, für den Empfang der Kommunikationsverbindung den Basismodus vorauszusetzen oder sicherzustellen.

8. Bedienvorrichtung (91) nach einem der vorangegangenen Ansprüche, wobei die Remote-Empfangsfunktion (91E) ausgebildet ist, beim Empfang der Kommunikationsverbindung eine Autorisierung des Benutzers zurückzusetzen.

9. Bedienvorrichtung (91) nach einem der vorangegangenen Ansprüche, wobei die Remote-Empfangsfunktion (91E) ausgebildet ist, beim Empfang der Kommunikationsverbindung eine zeitlich begrenzte Benutzer-Bestätigung zum Zurücksetzen einer Autorisierung des Benutzers abzuwarten und danach die Autorisierung des Benutzers zurückzusetzen.

10. Bedienvorrichtung (91) nach einem der vorangegangenen Ansprüche, wobei die Bedienung der Textilmaschine (T1) abhängig ist von einer dem Benutzer oder dem entfernten Benutzer zugeordneten Berechtigungsstufe.

11. Bedienvorrichtung (91) nach einem der vorangegangenen Ansprüche, wobei eine oder mehrere Funktionen der Bedienvorrichtung (91) abhängig sind von in einer Spinnereizentrale (Z) abgespeicherten Informationen, insbesondere eine oder mehrere der folgenden Funktionen: die Autorisierungsfunktion, die Remote-Sendefunktion, die Remote-Empfangsfunktion, insbesondere abhängig von einer in der Spinnereizentrale (Z) abgespeicherten Berechtigungsstufe des Benutzers oder des entfernten Benutzers.

12. Bedienvorrichtung (91) nach einem der vorangegangenen Ansprüche, ausgebildet zur Anzeige, ob die Bedienvorrichtung in den Basismodus oder in den Expertenmodus umgeschaltet ist und/oder zur Anzeige, ob eine Kommunikationsverbindung von einer entfernten Bedienvorrichtung (92, BZ, BM) besteht.

13. Bedienvorrichtung (91) nach einem der vorangegangenen Ansprüche, ausgebildet, dass zur Bedienung der Textilmaschine (T1) und/oder der entfernten Textilmaschine (T2, T3) das Einstellen von Parametern der Textilmaschine (T1, T2, T3) zur Verfügung gestellt ist.

14. Bedienvorrichtung (91) nach einem der vorangegangenen Ansprüche, ausgebildet, dass zur Bedienung der Textilmaschine (T1, T2, T3) die Anzeige von Informationen über die Textilmaschine (T1) und/oder über die entfernte Textilmaschine (T2, T3) zur Verfügung gestellt ist, wobei die Informationen insbesondere Alarme und/oder Warnmeldungen umfassen, insbesondere abhängig davon ob sich die Informationen auf die Textilmaschine (T1) oder auf die entfernte Textilmaschine (T2, T3) beziehen, insbesondere weiter abhängig davon, ob die Bedienvorrichtung (91) in den Basismodus oder in den Expertenmodus umgeschaltet ist.

15. Verfahren zur Bedienung von Textilmaschinen (T1, T2, T3), wobei:
eine Bedienvorrichtung (91) einer Textilmaschine (T1) zugeordnet wird,
in der Bedienvorrichtung (91) eine Umschaltfunktion zum Umschalten der Bedienvorrichtung (91) zwischen einem Basismodus und einem Expertenmodus aktiviert wird, wobei der Basismodus eine Basisbedienmaske (10) zur Basisbedienung der Textilmaschine (T1) durch einen Benutzer zur Verfügung stellt und der Expertenmodus eine Expertenbedienmaske (70) zur Expertenbedienung der Textilmaschine (T1) durch den Benutzer zur Verfügung stellt,
in der Bedienvorrichtung (91) eine Autorisierungsfunktion zum Autorisieren des Benutzers aktiviert wird und die Umschaltfunktion ausgebildet wird, dass für das Umschalten in den Expertenmodus die Autorisierung des Benutzers vorausgesetzt ist,
in der Bedienvorrichtung (91) eine Remote-Sendefunktion (91S) aktiviert wird zur Bedienung einer entfernten Textilmaschine (T2, T3) durch den Benutzer, welche Remote-Sendefunktion (91S) ausgebildet wird zum Erstellen einer Kommunikationsverbindung zu der entfernten Textilmaschine (T2, T3) zur Bedienung der entfernten Textilmaschine (T2, T3) durch den Benutzer der Bedienvorrichtung (91), und
in der Bedienvorrichtung (91) eine Remote-Empfangsfunktion (91E) aktiviert wird zur Bedienung der Textilmaschine (T1) durch einen entfernten Benutzer, welche Remote-Empfangsfunktion (91E) ausgebildet wird zum Empfang einer Kommunikationsverbindung von einer entfernten Bedienvorrichtung (92, 9Z, 9M) zur Bedienung der Textilmaschine (T1) durch den entfernten Benutzer.

## Claims

1. An operating device (91) for operating textile machines (T1, T2, T3),
wherein the operating device (91) has a switching function for switching the operating device (91) between a basic mode and an expert mode, wherein the basic mode provides a basic operating mask (10) for the basic operation of a textile machine (T1) by a user, and the expert mode provides an expert operating mask (70) for expert operation of the textile machine (T1) by the user,
wherein the operating device (91) has an authorization function for authorizing the user, and the switching function is designed to require the authorization of the user for switching into the expert mode,
wherein the operating device (91) has a remote transmitting function (91S) for operating a remote textile machine (T2, T3) by the user, which remote transmitting function (91S) is designed to create a communication connection to the remote textile machine (T2, T3) for operating the remote textile machine (T2, T3) by the user, and
wherein the operating device (91) has a remote receiving function (91E) for operating the textile machine (T1) by a remote user, which remote receiving function (91E) is designed to receive a communication connection from a remote operating device (92, 9Z, 9M) to operate the textile machine (T1) by the remote user.

2. The operating device (91) according to claim 1, wherein the remote transmitting function (91S) is designed to create the communication connection to the remote textile machine (T2, T3) via an operating device (92) or via a control device (S2, S3) of the remote textile machine (T2, T3).

3. The operating device (91) according to any of the preceding claims, wherein the remote transmitting function (91S) is designed to require the authorization of the user for the creation of the communication link.

4. The operating device (91) according to any of the preceding claims, wherein the remote transmission function (91S) is designed to require expert mode for the creation of the communication link.

5. The operating device (91) according to any of the preceding claims, wherein the remote transmitting function (91S) is designed to carry out an authorization check for the creation of the communication link.

6. The operating device (91) according to any of the preceding claims, wherein the remote transmitting function (91S) is designed to create multiple communication connections for operating multiple remote textile machines (T2, T3).

7. The operating device (91) according to any of the preceding claims, wherein the remote receiving function (91E) is designed to require or ensure basic mode for receiving the communication link.

8. The operating device (91) according to any of the preceding claims, wherein the remote receiving function (91E) is designed to reset an authorization of the user when the communication link is received.

9. The operating device (91) according to any of the preceding claims, wherein the remote receiving function (91E) is designed to wait for a time-limited user acknowledgment to reset an authorization of the user and then to reset the authorization of the user upon receipt of the communication link.

10. The operating device (91) according to any of the preceding claims, wherein the operation of the textile machine (T1) is dependent on an authorization level assigned to the user or the remote user.

11. The operating device (91) according to any of the preceding claims, wherein one or more functions of the operating device (91) are dependent on information stored in a spinning mill control center (Z), in particular one or more of the following functions: the authorization function, the remote transmission function, the remote receiving function, in particular depending on an authorization level of the user or the remote user stored in the spinning mill control center (Z).

12. The operating device (91) according to any of the preceding claims, designed to indicate whether the operating device is switched to basic mode or to expert mode, and/or to indicate whether a communication connection exists from a remote operating device (92, BZ, BM).

13. The operating device (91) according to any of the preceding claims, which is designed such that the setting of parameters of the textile machine (T1, T2, T3) is provided to operate the textile machine (T1) and/or the remote textile machine (T2, T3).

14. The operating device (91) according to any of the preceding claims, which is designed such that, for operating the textile machine (T1, T2, T3), information about the textile machine (T1) and/or via the remote textile machine (T2, T3) is provided, wherein the information comprises, in particular, alarms and/or warning messages, in particular depending on whether the information on the textile machine (T1) or on the remote textile machine (T2, T3) is related, in particular further depending on whether the operating device (91) is switched to basic mode or into expert mode.

15. A method for operating textile machines (T1, T2, T3), wherein:
an operating device (91) is assigned to a textile machine (T1),
a switching function for switching the operating device (91) between a basic mode and an expert mode is activated in the operating device (91), wherein the basic mode provides a basic operating mask (10) for basic operation of the textile machine (T1) by a user, and the expert mode provides an expert operating mask (70) for expert operation of the textile machine (T1) by the user,
an authorization function for authorizing the user is activated in the operating device (91), and the switching function is designed such that the authorization of the user is required for switching into expert mode,
in the operating device (91), a remote transmitting function (91S) is activated for operating a remote textile machine (T2, T3) by the user, which remote transmitting function (91S) is designed to create a communication connection to the remote textile machine (T2, T3) for operating the remote textile machine (T2, T3) by the user of the operating device (91), and
in the operating device (91), a remote receiving function (91E) is activated for operating the textile machine (T1) by a remote user, which remote receiving function (91E) is designed to receive a communication connection from a remote operating device (92, 9Z, 9M) to operate the textile machine (T1) by the remote user.

## Revendications

1. Dispositif de manipulation (91) pour la manipulation de machines textiles (T1, T2, T3),
dans lequel le dispositif de manipulation (91) présente une fonction de commutation pour la commutation du dispositif de manipulation (91) entre un mode de base et un mode expert, dans lequel le mode de base fournit un masque de manipulation de base (10) pour la manipulation de base d'une machine textile (T1) par un utilisateur et le mode expert fournit un masque de manipulation expert (70) pour la manipulation experte de la machine textile (T1) par l'utilisateur,
dans lequel le dispositif de manipulation (91) présente une fonction d'autorisation pour autoriser l'utilisateur et la fonction de commutation est configurée pour présupposer l'autorisation de l'utilisateur pour la commutation dans le mode expert,
dans lequel le dispositif de manipulation (91) présente une fonction d'envoi à distance (91S) pour la manipulation d'une machine textile distante (T2, T3) par l'utilisateur, laquelle fonction d'envoi à distance (91S) est configurée pour établir une connexion de communication avec la machine textile distante (T2, T3) pour la manipulation de la machine textile distante (T2, T3) par l'utilisateur, et
dans lequel le dispositif de manipulation (91) présente une fonction de réception à distance (91E) pour la manipulation de la machine textile (T1) par un utilisateur distant, laquelle fonction de réception à distance (91E) est configurée pour recevoir une connexion de communication provenant d'un dispositif de manipulation distant (92, 9Z, 9M) pour la manipulation de la machine textile (T1) par l'utilisateur distant.

2. Dispositif de manipulation (91) selon la revendication 1, dans lequel la fonction d'envoi à distance (91S) est configurée pour établir la connexion de communication avec la machine textile distante (T2, T3) par l'intermédiaire d'un dispositif de manipulation (92) ou par l'intermédiaire d'un dispositif de commande (S2, S3) de la machine textile distante (T2, T3).

3. Dispositif de manipulation (91) selon l'une des revendications précédentes, dans lequel la fonction d'envoi à distance (91S) est configurée pour présupposer l'autorisation de l'utilisateur pour l'établissement de la connexion de communication.

4. Dispositif de manipulation (91) selon l'une des revendications précédentes, dans lequel la fonction d'envoi à distance (91S) est configurée pour présupposer le mode expert pour l'établissement de la connexion de communication.

5. Dispositif de manipulation (91) selon l'une des revendications précédentes, dans lequel la fonction d'envoi à distance (91S) est configurée pour effectuer une vérification de permission pour l'établissement de la connexion de communication.

6. Dispositif de manipulation (91) selon l'une des revendications précédentes, dans lequel la fonction d'envoi à distance (91S) est configurée pour établir plusieurs connexions de communication pour la manipulation de plusieurs machines textiles distantes (T2, T3).

7. Dispositif de manipulation (91) selon l'une des revendications précédentes, dans lequel la fonction de réception à distance (91E) est configurée pour présupposer ou garantir le mode de base pour la réception de la connexion de communication.

8. Dispositif de manipulation (91) selon l'une des revendications précédentes, dans lequel la fonction de réception à distance (91E) est configurée pour réinitialiser une autorisation de l'utilisateur lors de la réception de la connexion de communication.

9. Dispositif de manipulation (91) selon l'une des revendications précédentes, dans lequel la fonction de réception à distance (91E) est configurée pour attendre, lors de la réception de la connexion de communication, un accusé de réception d'utilisateur limité dans le temps pour la réinitialisation d'une autorisation de l'utilisateur et pour réinitialiser ensuite l'autorisation de l'utilisateur.

10. Dispositif de manipulation (91) selon l'une des revendications précédentes, dans lequel la manipulation de la machine textile (T1) dépend d'un niveau de permission attribué à l'utilisateur ou à l'utilisateur distant.

11. Dispositif de manipulation (91) selon l'une des revendications précédentes, dans lequel une ou plusieurs fonctions du dispositif de manipulation (91) dépendent d'informations mémorisées dans une centrale de filature (Z), en particulier une ou plusieurs des fonctions suivantes : la fonction d'autorisation, la fonction d'envoi à distance, la fonction de réception à distance, en particulier en fonction d'un niveau de permission de l'utilisateur ou de l'utilisateur distant mémorisé dans la centrale de filature (Z).

12. Dispositif de manipulation (91) selon l'une des revendications précédentes, configuré pour indiquer si le dispositif de manipulation est commuté dans le mode de base ou dans le mode expert et/ou pour indiquer si une connexion de communication par un dispositif de manipulation distant (92, BZ, BM) existe.

13. Dispositif de manipulation (91) selon l'une des revendications précédentes, configuré de sorte que, pour la manipulation de la machine textile (T1) et/ou de la machine textile distante (T2, T3), le réglage de paramètres de la machine textile (T1, T2, T3) est fourni.

14. Dispositif de manipulation (91) selon l'une des revendications précédentes, configuré de sorte que, pour la manipulation de la machine textile (T1, T2, T3), l'affichage d'informations concernant la machine textile (T1) et/ou concernant la machine textile distante (T2, T3) est fourni, dans lequel les informations comprennent en particulier des alarmes et/ou des messages d'avertissement, en particulier selon que les informations se rapportent à la machine textile (T1) ou à la machine textile distante (T2, T3), en particulier en outre selon que le dispositif de manipulation (91) est commuté dans le mode de base ou dans le mode expert.

15. Procédé pour la manipulation de machines textiles (T1, T2, T3), dans lequel :
un dispositif de manipulation (91) est associé à une machine textile (T1),
une fonction de commutation est activée dans le dispositif de manipulation (91) pour commuter le dispositif de manipulation (91) entre un mode de base et un mode expert, dans lequel le mode de base fournit un masque de manipulation de base (10) pour la manipulation de base de la machine textile (T1) par un utilisateur et le mode expert fournit un masque de manipulation expert (70) pour la manipulation experte de la machine textile (T1) par l'utilisateur,
une fonction d'autorisation est activée dans le dispositif de manipulation (91) pour autoriser l'utilisateur et la fonction de commutation est configurée de sorte que l'autorisation de l'utilisateur est présupposée pour la commutation dans le mode expert,
une fonction d'envoi à distance (91S) est activée dans le dispositif de manipulation (91) pour la manipulation d'une machine textile distante (T2, T3) par l'utilisateur, laquelle fonction d'envoi à distance (91S) est configurée pour établir une connexion de communication avec la machine textile distante (T2, T3) pour la manipulation de la machine textile distante (T2, T3) par l'utilisateur du dispositif de manipulation (91), et
une fonction de réception à distance (91E) est activée dans le dispositif de manipulation (91) pour la manipulation de la machine textile (T1) par un utilisateur distant, laquelle fonction de réception à distance (91E) est configurée pour recevoir une connexion de communication provenant d'un dispositif de manipulation distant (92, 9Z, 9M) pour la manipulation de la machine textile (T1) par l'utilisateur distant.
